# EUROPEAN PATENT SPECIFICATION

(11) **EP 4 502 801 B1**
(45) Date of publication and mention of the grant of the patent: **03.12.2025**
(21) Application number: 24179399.1
(22) Date of filing: 31.05.2024
(51) Int. Cl.: G06F 9/54, G06F 12/1009, G06F 12/1036

(54) **METHOD, APPARATUS, DEVICE AND STORAGE MEDIUM FOR DATA REQUEST PROCESSING**
VERFAHREN, VORRICHTUNG, VORRICHTUNG UND SPEICHERMEDIUM ZUR DATENANFORDERUNGSVERARBEITUNG
PROCÉDÉ, APPAREIL, DISPOSITIF ET SUPPORT DE STOCKAGE POUR TRAITEMENT DE DEMANDE DE DONNÉES

(30) Priority: 31.07.2023 CN 202310953290
(43) Date of publication of application: 05.02.2025
(73) Proprietor: Beijing Volcano Engine Technology Co., Ltd., Beijing 100190 (CN)
(72) Inventor: GUAN, Qiming, Beijing, 100028 (CN); ZHANG, Jiachen, Beijing, 100028 (CN); XIE, Yongji, Beijing, 100028 (CN); LI, Peng, Beijing, 100028 (CN); WANG, Haiyu, Beijing, 100028 (CN); ZHAO, Sheng, Beijing, 100028 (CN); JIN, Zewen, Beijing, 100028 (CN); WANG, Liming, Beijing, 100028 (CN); ZHANG, Tianci, Beijing, 100028 (CN); YANG, Jinfeng, Beijing, 100028 (CN); CHAI, Wen, Beijing, 100028 (CN)
(74) Representative: Marks & Clerk LLP

(56) References cited:
- US-A1- 2020 250 092
- US-A1- 2022 114 037

## Description

### CROSS REFERENCE

The present application claims priority to Chinese Patent Application No.202310953290.0 filed on July 31, 2023 and entitled "METHOD, APPARATUS, DEVICE AND STORAGE MEDIUM FOR DATA REQUEST PROCESSING'.

### FIELD

Embodiments of the present disclosure relate to the technical field of filesystem in userspace , and in particular, to a method, an apparatus, a device and a storage medium for data request processing.

### BACKGROUND

Currently, the filesystem in userspace (FUSE) is widely applied due to its low latency, high performance and strong compatibility.

In the prior art, a filesystem in userspace processes and communicates data requests by a character device. In this case, a kernel module in the filesystem in userspace sends a data request to the userspace process by the character device, and the userspace process receives and processes the data request. Document US 2020/250092 A1 discloses a shared filesystem metadata cache implemented at a virtual filesystem in a userspace FUSE.

However, the inventor finds that the prior art has at least the following technical problems: during a process in which the userspace process receives a data request sent by the kernel module, it is needed to complete a plurality of context switches, which leads to low efficiency of the foregoing processing approach.

### SUMMARY

Embodiments of the present disclosure provide a method, an apparatus, a device, and a storage medium for data request processing, which may improve the processing efficiency of a data request.

In a first aspect, the embodiments of the present disclosure provide a method of data request processing, the method being applied at a filesystem in userspace, the filesystem in userspace including a kernel module and a userspace process, the kernel module being configured to send a data request to the userspace process, and the userspace process being configured to process the data request; the method comprising:
obtaining, by the userspace process, a data request list in the kernel module, where the data request list includes a plurality of data requests to be processed and virtual address information corresponding to respective data requests of the plurality of data requests, and querying physical address information corresponding to the virtual address information;
querying, by the physical address information, target cached data corresponding to the data request, from a plurality of cached data stored in the kernel module, where a one-to-one correspondence between the cached data and the physical address information is stored in the kernel module;
querying, for each of the data request, by the userspace process, the target cached data corresponding to the data request from a plurality of cached data stored in the kernel module, according to the virtual address information corresponding to the data request;
accessing, by the userspace process, the target cached data, and processing the data request.

In a second aspect, embodiments of the present disclosure provide an apparatus of data request processing, the apparatus being applied at a filesystem in userspace, the filesystem in userspace including a kernel module and a userspace process, the kernel module being configured to send a data request to the userspace process, and the userspace process being configured to process the data request; the apparatus comprising:
an obtaining module configured to obtain, by the userspace process, a data request list in the kernel module, where the data request list includes a plurality of data requests to be processed and virtual address information corresponding to respective data requests of the plurality of data requests;
a first query module configured to query, by the userspace process, for each of the data requests, the physical address information corresponding to the virtual address information, according to the virtual address information corresponding to the data request;
a second query module configured to query, by the physical address information, target cached data corresponding to the data request, from a plurality of cached data stored in the kernel module, where a one-to-one correspondence between the cached data and the physical address information is stored in the kernel module;
a processing module configured to access, by the userspace process, the target cache data, and process the data request.

In a third aspect, embodiments of the present disclosure provide an electronic device, comprises:
a processor and a memory communicatively connected to the processor;
the memory storing computer executable instructions;
the processor executing the computer-executable instructions stored by the memory to implement the method of data request processing according to the first aspect.

In a fourth aspect, embodiments of the present disclosure provide a computer readable storage medium, where the computer readable storage medium stores computer executable instructions, the computer executable instructions, when executed by a processor, causing the processor to implement the method of data request processing according to the first aspect.

In a fifth aspect, embodiments of the present disclosure provide a computer program product, including a computer program, the computer program, when executed by a processor, causing the processor to implement the method of data processing according to the first aspect.

Embodiments of the present disclosure provide a method, an apparatus, device, and a storage medium for data request processing, the method comprising: obtaining, by the userspace process, a data request list in the kernel module, where the data request list includes a plurality of data requests to be processed and virtual address information corresponding to respective data requests of the plurality of data requests; querying, by the userspace process, for each of the data requests, physical address information corresponding to the virtual address information; querying, by the physical address information, target cached data corresponding to the data request, from a plurality of cached data stored in the kernel module, where a one-to-one correspondence between the cached data and the physical address information is stored in the kernel module; accessing, by the userspace process, the target cached data, and processing the data request. In the embodiments of the present application. In embodiments of the present application, for each data request, the corresponding target data may be obtained from shared memory by the address information corresponding to the data request, and then data reading and writing processing may be completed. That is, the user-mode process may directly obtain the target data from the shared memory of the kernel module, which does not require context switching between the userspace process and the kernel module, further reduces the number of data transmissions (namely, the number of context switching), and thus improves the processing efficiency of the data request.

### BRIEF DESCRIPTION OF THE DRAWINGS

In order to more clearly illustrate the technical solutions in the embodiments of the present disclosure or in the prior art, the following will briefly introduce the accompanying drawings that need to be used in the description of the embodiments or the prior art. It will be obvious that the accompanying drawings in the following description are some of the embodiments of the present disclosure. For the person of ordinary skill in the art, other accompanying drawings may also be obtained according to these drawings, without creative efforts.
FIG. 1 is a schematic diagram of an application scenario of a method of data request processing according to embodiments of the present disclosure;
FIG. 2 is a flowchart of a method of data request processing according to embodiments of the present disclosure;
FIG. 3 is a flowchart of another method of data request processing according to embodiments of the present disclosure;
FIG. 4 is a structural block diagram of an apparatus of data request processing according to embodiments of the present disclosure;
FIG. 5 is a schematic diagram of a hardware structure of an electronic device according to embodiments of the present disclosure.

### DETAILED DESCRIPTION

In order to make the purposes, technical solutions and advantages of the embodiments of the present disclosure more apparent, the technical solutions in the embodiments of the present disclosure will be described clearly and completely in the following in connection with the accompanying drawings in the embodiments of the present disclosure. It is obvious that the described embodiments are only a part of the embodiments of the present disclosure, and not all of the embodiments. All other embodiments obtained by persons of ordinary skill in the art based on the embodiments of the present disclosure without creative efforts fall within the scope of protection of the present disclosure.

It should be noted that the user information (including, but not limited to, user equipment information, user personal information and/or the like) and data (including, but not limited to, data used for analysis, stored data, displayed data and/or the like) involved in the present application are information and data that are authorized by the user or be fully authorized by each party, and that the collection, use and processing of the relevant data need to comply with the relevant laws, regulations and standards, and that the relevant operation entry is provided for the user to choose authorization or rejection.

Currently, the filesystem in userspace (FUSE) is widely applied due to its low latency, high performance and strong compatibility.

In the prior art, a filesystem in userspace processes and communicates data requests by a character device.A kernel module in a filesystem in userspace sends a data request to the userspace process by the character device, and the userspace process receives and processes the data request. However, during a process in which a user process receives a data request sent by a kernel module, context switching needs to be completed for multiple times, which result in low efficiency of the foregoing processing approach.

It may be seen therefrom that how to reduce the number of context switching to improve the processing efficiency of data requests is a problem to be solved urgently at present.

In order to solve the above problem, the present embodiment provides the following technical concept: first, obtaining, by the userspace process, a data request list in the kernel module, where the data request list includes a plurality of data requests to be processed and virtual address information corresponding to respective data requests of the plurality of data requests; then, querying, for each of the data requests, according to the virtual address information corresponding to the data request, physical address information corresponding to the virtual address information; querying, by the physical address information, target cached data corresponding to the data request, from a plurality of cached data stored in the kernel module; finally, accessing, by the userspace process, the target cached data, and processing the data request. In the above processing procedure, for each of the data request, the corresponding target data may be obtained from shared memory by the address information corresponding to the data request, and then data reading and writing processing are completed. That is, the user mode process may directly obtain the target data from the shared memory of the kernel module, which does not require context switching between the userspace process and the kernel module, further reduces the number of data transmissions (namely, the number of context switching), and thus improves the processing efficiency of the data request.

Application scenarios of the embodiments of the present disclosure will be explained below.

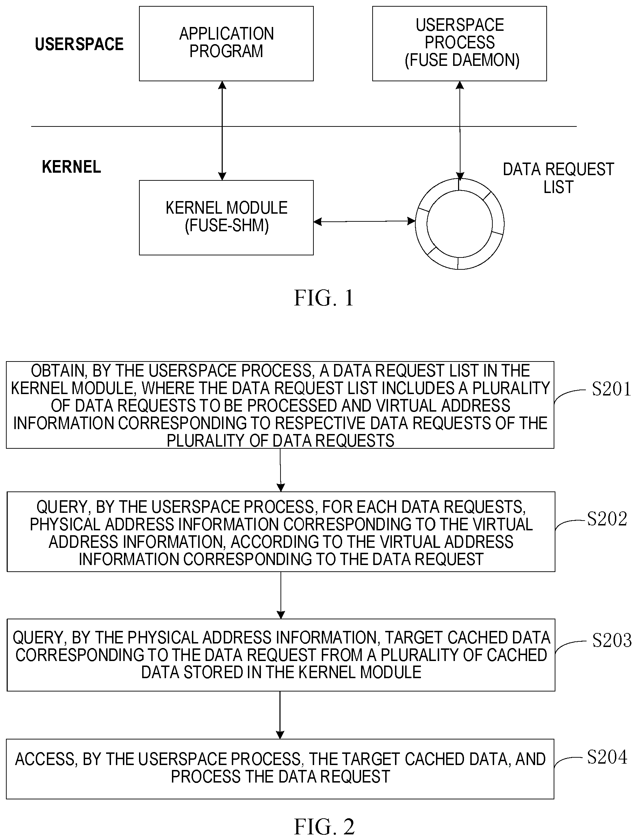

A method of audio authority processing provided in the embodiments of the present disclosure may be applied in a scenario in which various types of data requests are processed. FIG. 1 is a schematic diagram of an application scenario of a method of data request processing according to embodiments of the present disclosure. As shown in FIG. 1, the method of data request processing may be applied in data communication between a kernel module (which may be represented as fuse-shm) and a userspace process (which may be represented as fuse Daemon) in a user mode file system. When a kernel module receives a data request sent by an application program, the kernel module adds the data request to a data request list, forwards the data request list to a userspace process, and processes, by the userspace process, each data request in the data request list. The method of audio authority processing provided by embodiments of the present disclosure will be described in detail below using detailed embodiments.

FIG. 2 is a flowchart of a method of data request processing according to embodiments of the present disclosure. The method may also be applied at a filesystem in userspace. The filesystem in userspace includes a kernel module and a userspace process. The kernel module is configured to send a data request to the userspace process. The userspace process is configured to process the data request. As shown in FIG. 2, the method includes:
In S201, a data request list in the kernel module is obtained by the userspace process, where the data request list includes a plurality of data requests to be processed and virtual address information corresponding to respective data requests of the plurality of data requests.

In embodiments of the present disclosure, a character device interface is configured in a kernel module, and a data transmission layer connected to the character device interface is configured in a userspace process; accordingly, this step is: obtaining, by the data transmission layer in the userspace process and the character device interface in the kernel module, the data request list from the kernel module. Alternatively, the character device interface may be represented by dev/fuse. The data transmission layer may be represented by function-shm dataplant. The kernel module and the userspace process may communicate with the data transmission layer by the character device interface. It should be noted that the user process may also obtain installation information, uninstallation information and/or the like of the data request from the kernel module.

In some embodiments, each of the data requests corresponds to a data description label, and the data description label includes virtual address information. Accordingly, before the data request list in the kernel module is obtained by the userspace process, the method further includes: in response to the kernel module receiving a data request of any application program, determining a data description label of the data request, where the data description label includes the virtual address information; associating the virtual address information with the data request, and adding the associated data request and the virtual address information into the data request list. Alternatively, the data description label may be represented by a descriptor table.

The application program may be any application program installed locally on the terminal. It should be noted that the data description label may further include one or more of data length information, data identification information and data type information. The data length information may be represented by len, the data identification information may be represented by flag, and the data type information may be represented by Desc.

In S202, for each of the data requests, physical address information corresponding to the virtual address information is queried by the userspace process, according to the virtual address information corresponding to the data request.

In embodiments of the present disclosure, the physical address information corresponding to the virtual address information may be queried from a Memory Management Unit (MMU) page table. Accordingly, before the data request list in the kernel module is obtained by the userspace process, the method further includes: configuring, by the kernel module, a memory management unit (MMU) page table, where the MMU page table includes the virtual address information corresponding to the physical address information for each of the plurality of cached data.

In this case, this step may include: querying, by the userspace process, for each data request, the physical address information corresponding to the virtual address information from the MMU page table, according to the virtual address information corresponding to the data request. Each of the cached data in the kernel module corresponds to one physical address, and the corresponding cached data may be accessed by the physical address information.

Here, by the physical address information, the target cached data corresponding to the data request is queried from the plurality of cached data stored in the kernel module. In this way, the plurality of cached data stored in the kernel module may be used as the shared memory for the userspace process to access, which does not require context switching between the userspace process and the kernel module, further reduces the number of data transmissions (namely, the number of context switching), and thus improves the processing efficiency of the data request.

It should be noted that in a case where the cached data is accessed directly from the kernel module, if an anomaly occurs when the cached data is modified, a system anomaly may be caused. In order to avoid a system anomaly occurring due to a system file being changed. Embodiments of the present application may also perform a backup of the cached data to obtain the rebound cached data, and then query the target cached data corresponding to the data request from the backed-up rebound cached data.

Further, configuring the memory management unit (MMU) page table by the kernel module includes: copying, by the kernel module, each of the plurality of cached data to obtain a plurality of rebound cached data, and configuring the corresponding virtual address information for the physical address information for each of the rebound cached data to obtain the MMU page table. Alternatively, the cached data may be represented by Buffer, and the rebound cached data may be represented by Bounce Buffer. It should be noted that it is possible to back up all the cached data in the kernel module, or only back up the cached data accessed by the userspace process.

In this case, querying, by the userspace process, for each data request, the physical address information corresponding to the virtual address information, according to the virtual address information corresponding to the data request includes: querying, by the userspace process, for each data request, the physical address information corresponding to the virtual address information, from the MMU page table, according to the virtual address information corresponding to the data request.

In S203, target cached data corresponding to the data request is queried by the physical address information from a plurality of cached data stored in the kernel module.

In some embodiments, a one-to-one correspondence between the cached data and the physical address information is stored in the kernel module.

In other embodiments, each of the rebound cached data in the kernel module corresponds to a physical address, and the corresponding rebound cached data may be accessed by the physical address information. Accordingly, this step is: querying, by the physical address information, the target cache data corresponding to the data request, from the plurality of the rebound cached data stored in the kernel module.

Here, the cached data is backed up to obtain the rebound cached data, and then the target cached data corresponding to the data request is queried from the backed up rebound cached data. In this way, it is avoided that a system anomaly occurs due to a system file being changed, thus improving the stability of the method of data processing.

In S204, the target cached data is accessed by the userspace, and the data request is processed.

In embodiments of the present disclosure, the data request includes a data read request or a data write request; accordingly, this step is: in response to the data request being the data read request, reading, by the userspace process, the target cached data; and in response to the data request being the data write request, writing, by the userspace process, the target cached data.

In the method of data request processing provided in this embodiment, for each of the data requests, the corresponding target data may be obtained from shared memory by the address information corresponding to the data request, and then the data reading and writing processing may be completed. That is, the userspace process may directly obtain the target data from the shared memory of the kernel module. This may not require context switching between the userspace process and the kernel module, further reduces the number of data transmissions (namely, the number of context switching), and thus improves the processing efficiency of the data request.

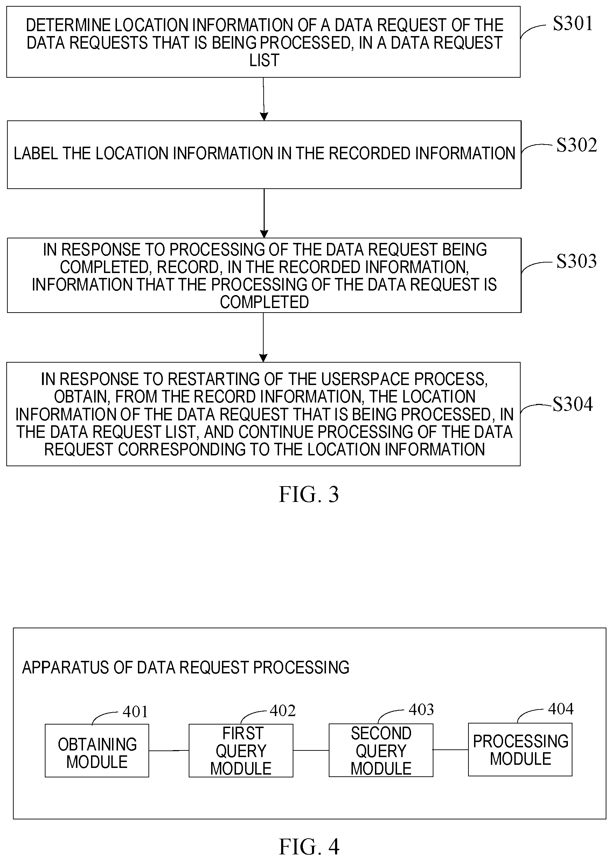

FIG. 3 is a flowchart of another method of data request processing according to embodiments of the present disclosure. On the basis of the embodiments of FIG. 2, the present application may also record a process of data processing to improve the high availability of the processing. As shown in FIG. 3, the method includes:

In S301, location information of a data request of the data requests that is being processed may be determined in a data request list.

In embodiments of the present application, the location information may be a request descriptor index corresponding to a data request that is being processed. Herein, one data request corresponds to one request descriptor index, and a corresponding data request may be queried by the request descriptor index. Alternatively, the request descriptor index may be represented by idx.

In S302, the location information is labeled in the recorded information.

Alternatively, a request descriptor index is recorded in the recorded information, and the location of the data request may be labeled in the data request list. Herein, the location information may be represented as virtqueue-log.

In S303, in response to processing of the data request being completed, information that the processing of the data request is completed may be recorded in the recorded information.

For example, the recorded information may be represented by virtqueue-log. In response to processing of the data request being completed, information that the processing of the data request in the virtqueue-log is completed is recorded in the recorded information.

In S304, in response to restarting of the userspace process, the location information of the data request that is being processed is obtained from the record information in the data request list, and processing of the data request corresponding to the location information is continued.

In the embodiment of the present application, in the case that the userspace process is abnormally closed, the userspace process may be restarted.

For example, the location information may be a request descriptor index corresponding to a data request that is being processed. Accordingly, this step is: in response to the userspace process being abnormal closed, restarting the userspace process; obtaining the request descriptor index corresponding to the data request that is being processed, from the record information; querying, by the request descriptor index, the corresponding data request; and continuing the data request.

In embodiments of the present disclosure, the location information of the data request that is being processed, in the data request list may be recorded by the record information. In this way, when the userspace process is abnormally closed, it is possible to quickly determine, by the location information labeled in the recorded information, the data request the processing of which is uncompleted, and to continue processing of the uncompleted data request, thereby improving the high availability of the userspace process, and further improving the processing efficiency of the data request.

FIG. 4 is a structural block diagram of an apparatus of data request processing provided in embodiments of the present disclosure, which is applied at a filesystem in userspace. The filesystem in userspace includes a kernel module and a userspace process, the kernel module is configured to send a data request to the userspace process, and the userspace process is configured to process the data request. Referring to FIG. 4, the apparatus of data request processing includes: an obtaining module 401, a first query module 402, a second query module 403 and a processing module 404.

The obtaining module 401 is configured to obtain, by the userspace process, a data request list in the kernel module, where the data request list includes a plurality of data requests to be processed and virtual address information corresponding to respective data requests of the plurality of data requests.

The first query module 402 is configured to query, by the userspace process, for each of the data requests, the physical address information corresponding to the virtual address information, according to the virtual address information corresponding to the data request.

The second query module 403 is configured to query, by the physical address information, target cached data corresponding to the data request, from a plurality of cached data stored in the kernel module, where a one-to-one correspondence between the cached data and the physical address information is stored in the kernel module.

The processing module 404 is configured to access, by the userspace process, the target cache data, and process the data request.

According to one or more embodiments of the present disclosure, the apparatus further includes: a configuration module; and the configuration module is configured to configure, by the kernel module, a memory management unit (MMU) page table, where the MMU page table includes the virtual address information corresponding to the physical address information for each of the plurality of cached data. Accordingly, the first query module 402 queries, by the userspace process, for each data request, the physical address information corresponding to the virtual address information, according to the virtual address information corresponding to the data request, specifically including: querying, by the userspace process, for each data request, the physical address information corresponding to the virtual address information from the MMU page table, according to the virtual address information corresponding to the data request.

According to one or more embodiments of the present disclosure, the configuring module configures, by the kernel module, the memory management unit (MMU) page table, specifically including: copying, by the kernel module, each of the plurality of cached data to obtain a plurality of rebound cached data, and configuring the corresponding virtual address information for the physical address information for each of the rebound cached data to obtain the MMU page table. Accordingly, the second query module 403 queries, by the physical address information, the target cached data corresponding to the data request from the plurality of cached data stored in the kernel module, specifically including: querying, by the physical address information, the target cache data corresponding to the data request, from the plurality of the rebound cached data stored in the kernel module.

According to one or more embodiments of the present disclosure, a character device interface is configured in the kernel module, and a data transmission layer connected to the character device interface is configured in the user process. Accordingly, the obtaining module 401 obtains, by the userspace process, the data request list in the kernel module, specifically including: obtaining, by the data transmission layer in the userspace process and the character device interface in the kernel module, the data request list from the kernel module.

According to one or more embodiments of the present disclosure, the apparatus further includes: a recording module; and the recording module is configured to determine location information of a data request that is being processed, in the data request list; label the location information in recorded information; and in response to processing of the data request being completed, record, in the recorded information, information that the processing of the data request processing is completed.

According to one or more embodiments of the present disclosure, the processing module 404 is further configured to in response to restarting of the userspace process, obtain, from the record information, that the location information of the data request that is being processed, in the data request list; continue processing of the data request corresponding to the location information.

According to one or more embodiments of the present disclosure, the apparatus further includes: a determining module; and the determining module is configured to in response to the kernel module receiving a data request of any application program, determine a data description label of the data request, where the data description label incudes the virtual address information; associate the virtual address information with the data request, and add the associated data request and the virtual address information into the data request list.

According to one or more embodiments of the present disclosure, the data description label further includes one or more of data length information, data identification information and data type information.

According to one or more embodiments of the present disclosure, the data request includes a data read request or a data write request. The processing module 404 accesses, by the userspace process, the target cached data and processes the data request, specifically including: in response to the data request being the data read request, reading, by the userspace process, the target cached data; and in response to the data request being the data write request, writing, by the userspace process, the target cached data.

The obtaining module 401, the first query module 402, the second query module 402 and the processing module 404 are connected in sequence. The apparatus of data request processing provided in this embodiment may implement the technical solutions of the above method embodiments, which are similar in terms of implementation principles and technical effects, and this embodiment will not be repeated herein.

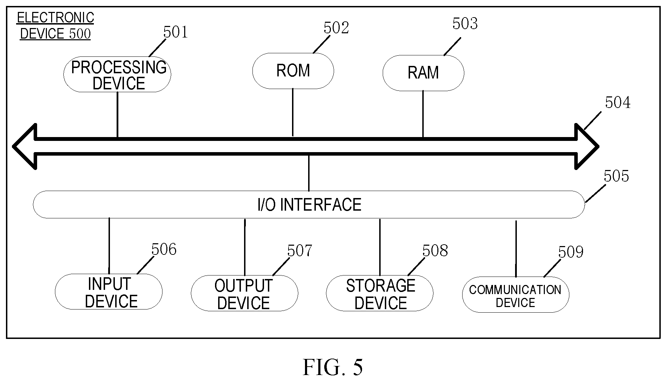

FIG. 5 is a schematic diagram of a hardware structure of an electronic device according to embodiments of the present disclosure. Referring to FIG. 5, the electronic device 500 may be a terminal device or a server. Herein, the terminal device may include, but is not limited to, a mobile terminal such as a mobile phone, a laptop computer, a digital broadcast receiver, a personal digital assistant (PDA), a portable android device (PAD), a portable media player (PMP), a vehicle-mounted terminal (for example, a vehicle-mounted navigation terminal) and/or the like, and a fixed terminal such as a digital TV, a desktop computer and/or the like. The electronic device shown in FIG. 5 is only an example and should not bring any limitation to the functions and scope of use of embodiments of the present disclosure.

As shown in FIG. 5, the electronic device 500 may include a processing device (e.g., a central processing unit, a graphics processor, etc.) 501 that may perform various suitable actions and processes in accordance with a program stored in a read only memory (ROM) 502 or a program loaded into a random access memory (RAM) 503 from a storage device 508. A plurality of programs and data necessary for the operation of the electronic device 500 are also stored in the RAM 503. The processing device 501, the ROM 502 and the RAM 503 are connected to each other via a bus 504. An input/output (I/O) interface 505 is also connected to the bus 504.

In general, the following devices may be connected to the I/O interface 505: an input device 506 including, for example, a touch screen, a touch pad, a keyboard, a mouse, a camera, a microphone, an accelerometer, a gyroscope, and/or the like; an output device 507 including, for example, a liquid crystal display (LCD), a speaker, a vibrator, and the like; the storage device 508 including, for example, a magnetic tape, a hard disk, and the like; and a communication device 509. The communication device 509 may allow the electronic device 500 to communicate in wirelessly or wired ways with other devices to exchange data. While FIG. 5 illustrates the electronic device 500 having various devices, it should be understood that it is not required to implement or have all of the illustrated devices. More or fewer devices may alternatively be implemented or provided.

In particular, according to embodiments of the present disclosure, the processes described above with reference to the flowcharts may be implemented as computer software programs. For example, embodiments of the present disclosure include a computer program product including a computer program carried on a computer readable medium. The computer program includes a program code for performing the method as shown in the flowchart. In such embodiments, the computer program may be downloaded and installed from the network through the communication device 509, or installed from the storage device 508, or installed from the ROM 502. When the computer program is executed by the processing device 501, the above-described functions defined in the method are performed, according to embodiments of the present disclosure.

It should be noted that the computer readable medium described above in the present disclosure may be a computer readable signal medium or a computer readable storage medium, or any combination of the above. The computer-readable storage medium may be, for example, but is not limited to, an electronic, magnetic, optical, electromagnetic, infrared or semiconductor system, apparatus, or device, or any suitable combination of the above. More specific examples of the computer readable storage medium may include, but are not limited to, an electrical connection having one or more cables, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, a computer readable storage medium may be any tangible medium that may contain or store a program that may be used by or in combination with an instruction execution system, apparatus, or device. In the present disclosure, a computer readable signal medium may include a data signal propagated in a baseband or as part of a carrier wave carrying computer readable program code. Such propagated signals may take a variety of forms, including, but not limited to, electromagnetic signals, optical signals, or any suitable combination of the above. The computer readable signal medium may also be any computer readable medium, other than a computer readable storage medium, which transmits, propagates or communicates a program for use by or in connection with an instruction-executing system, apparatus or device. The program code included in the computer readable medium may be transmitted by any suitable medium, including, but not limited to: a cable, an optical fiber, RF (radio frequency), etc., or any other means.

The above computer readable medium may be included in the above electronic device, or may exist separately and not be installed in the electronic device.

The above computer readable medium carries one or more programs, and when the one or more programs are executed by the electronic device, the one or more programs cause the electronic device to execute the method shown in the above embodiments.

Computer program code for performing the operations of the present disclosure may be written in one or more programming languages or combinations thereof, including an object-oriented programming language such as Java, Smalltalk, C++ and/or the like and conventional procedural programming languages, such as the "C" language or similar programming languages. The program code may be executed entirely on the user's computer, partly on the user's computer, as a stand-alone software package, partly on the user's computer and partly on a remote computer or entirely on the remote computer or server. In the case involving a remote computer, the remote computer may be connected to the user's computer through any type of network, including a local area network (LAN) or a wide area network (WAN), or connected to an external computer (for example, over the Internet via an Internet service provider).

The flowcharts and block diagrams in the accompanying drawings illustrate the architecture, functionality and operation of systems, methods and computer program products that may be implemented according to various embodiments of the present disclosure. In this regard, each block in the flowchart or block diagrams may represent a module, a program segment or a portion of code, which includes one or more executable instructions for implementing the specified logical function(s). It should also be noted that, in some alternative implementations, the functions noted in the blocks may occur in a different order than that noted in the accompanying drawings. For example, two consecutively represented blocks may actually be executed substantially in parallel, and they may sometimes be executed in a reverse order, depending upon the functionality involved. It should also be noted that each block in the block diagrams and/or flowchart, and combinations of the blocks in the block diagrams and/or flowcharts, may be implemented with a dedicated hardware-based system that performs the specified function or operation, or may be implemented with a combination of dedicated hardware and computer instructions.

The units described in the embodiments of the present disclosure may be implemented by software or hardware. Herein, the name of the unit does not constitute a limitation to the unit itself in some cases. For example, the first obtaining unit may also be described as "a unit to obtain at least two internet protocol addresses".

The functions described herein above may be performed, at least in part, by one or more hardware logic components. For example, without limitation, example types of hardware logic components that may be used include: Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), and/or the like.

In the context of this disclosure, a machine-readable medium may be a tangible medium that may contain or store a program for use by or in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus, or device, or any suitable combination of the above. More specific examples of machine-readable storage medium would include an electrical connection based on one or more cables, a portable computer disk, a hard disk, a random access memory (RAM), a read-only memory (ROM), an erasable programmable read-only memory (EPROM or flash memory), an optical fiber, a convenient compact disc read-only memory (CD-ROM), an optical storage device, a magnetic storage device, or any suitable combination of the above.

In a first aspect, according to one or more embodiments of the present disclosure, a method of data request processing is provided, applied at a filesystem in userspace, the filesystem in userspace including a kernel module and a userspace process, where the kernel module is configured to send a data request to the userspace process, and the userspace process is configured to process the data request; the method including:
obtaining, by the userspace process, a data request list in the kernel module, where the data request list includes a plurality of data requests to be processed and virtual address information corresponding to respective data requests of the plurality of data requests;
querying, by the userspace process, for each of the data requests, physical address information corresponding to the virtual address information, according to the virtual address information corresponding to the data request;
querying, by the physical address information, target cached data corresponding to the data request, from a plurality of cached data stored in the kernel module, where a one-to-one correspondence between the cached data and the physical address information is stored in the kernel module;
accessing, by the userspace process, the target cached data; and processing the data request.

According to one or more embodiments of the present disclosure, before obtaining, by the userspace process, the data request list in the kernel module, the method further includes:
configuring, by the kernel module, a memory management unit (MMU) page table, where the MMU page table incudes the virtual address information corresponding to the physical address information for each of the plurality of cached data; querying, by the userspace process, for each data request, the physical address information corresponding to the virtual address information, according to the virtual address information corresponding to the data request includes: querying, by the userspace process, for each data request, the physical address information corresponding to the virtual address information from the MMU page table, according to the virtual address information corresponding to the data request.

According to one or more embodiments of the present disclosure, configuring, by the kernel module, the memory management unit (MMU) page table includes: copying, by the kernel module, each of the plurality of cached data to obtain a plurality of rebound cached data, and configuring the corresponding virtual address information for the physical address information for each of the rebound cached data to obtain the MMU page table; and querying, by the physical address information, the target cached data corresponding to the data request from the plurality of cached data stored in the kernel module includes: querying, by the physical address information, the target cache data corresponding to the data request, from the plurality of the rebound cached data stored in the kernel module.

According to one or more embodiments of the present disclosure, a character device interface is configured in the kernel module, and a data transmission layer connected to the character device interface is configured in the user process; and obtaining, by the userspace process, the data request list in the kernel module includes: obtaining, by the data transmission layer in the userspace process and the character device interface in the kernel module, the data request list from the kernel module.

According to one or more embodiments of the present disclosure, the method further includes: determining location information of a data request of the data requests that is being processed, in the data request list; labelling the location information in recorded information; and in response to processing of the data request being completed, recording, in the recorded information, information that the processing of the data request is completed.

According to one or more embodiments of the present disclosure, the method further includes: in response to restarting of the userspace process, obtaining, from the record information, the location information of the data request that is being processed, in the data request list; and continuing processing of the data request corresponding to the location information.

According to one or more embodiments of the present disclosure, before obtaining, by the userspace process, the data request list in the kernel module, the method further includes: in response to the kernel module receiving a data request of any application program, determining a data description label of the data request, where the data description label includes the virtual address information; associating the virtual address information with the data request, and adding the associated data request and the virtual address information into the data request list.

According to one or more embodiments of the present disclosure, the data description label further includes one or more of data length information, data identification information and data type information.

According to one or more embodiments of the present disclosure, the data request includes a data read request or a data write request; and accessing, by the userspace process, the target cached data and processing the data request includes: in response to the data request being the data read request, reading, by the userspace process, the target cached data; and in response to the data request being the data write request, writing, by the userspace process, the target cached data.

In a second aspect, according to one or more embodiments of the present disclosure, an apparatus of data request processing is provided, which is applied at a filesystem in userspace, the filesystem in userspace including a kernel module and a userspace process, where the kernel module is configured to send a data request to the userspace process, and the userspace process is configured to process the data request, the apparatus including:
an obtaining module configured to obtain, by the userspace process, a data request list in the kernel module, where the data request list includes a plurality of data requests to be processed and virtual address information corresponding to respective data requests of the plurality of data requests;
**a** first query module configured to query, by the userspace process, for each of the data requests, the physical address information corresponding to the virtual address information, according to the virtual address information corresponding to the data request;
a second query module configured to query, by the physical address information, target cached data corresponding to the data request from a plurality of cached data stored in the kernel module, where a one-to-one correspondence between the cached data and the physical address information is stored in the kernel module;
a processing module configured to access, by the userspace process, the target cache data, and process the data request.

According to one or more embodiments of the present disclosure, the apparatus further includes: a configuration module, the configuration module configured to configure, by the kernel module, a memory management unit (MMU) page table, where the MMU page table includes the virtual address information corresponding to the physical address information for each of the plurality of cached data. Accordingly, the first query module queries, for each data request, by the userspace process, the physical address information corresponding to the virtual address information, according to the virtual address information corresponding to the data request, specifically including: querying, by the userspace process, for each data request, the physical address information corresponding to the virtual address information from the MMU page table, according to the virtual address information corresponding to the data request.

According to one or more embodiments of the present disclosure, the configuring module configures, by the kernel module, the memory management unit (MMU) page table, specifically including: copying, by the kernel module, each of the plurality of cached data to obtain a plurality of rebound cached data, and configuring the corresponding virtual address information for the physical address information for each of the rebound cached data to obtain the MMU page table. Accordingly, the second query module queries, by the physical address information, the target cached data corresponding to the data request from the plurality of cached data stored in the kernel module, specifically including: querying, by the physical address information, the target cache data corresponding to the data request, from the plurality of the rebound cached data stored in the kernel module.

According to one or more embodiments of the present disclosure, a character device interface is configured in the kernel module, and a data transmission layer connected to the character device interface is configured in the user process. Accordingly, the obtaining module obtains, by the userspace process, the data request list in the kernel module, specifically including: obtaining, by the data transmission layer in the userspace process and the character device interface in the kernel module, the data request list from the kernel module.

According to one or more embodiments of the present disclosure, the apparatus further comprises: a recording module; the recording module configured to determine location information of a data request that is being processed, in the data request list; label the location information in recorded information; and in response to processing of the data request being completed, record, in the recorded information, information that the processing of the data request is completed.

According to one or more embodiments of the present disclosure, the processing module is further configured to in response to restarting of the userspace process, obtain, from the record information, the location information of the data request that is being processed, in the data request list; continue processing of the data request corresponding to the location information.

According to one or more embodiments of the present disclosure, the apparatus further comprises: a determining module, the determining module configured to in response to the kernel module receiving a data request of any application program, determine a data description label of the data request, where the data description label includes the virtual address information; associate the virtual address information with the data request, and add the associated data request and the virtual address information into the data request list.

According to one or more embodiments of the present disclosure, the data description label further includes one or more of data length information, data identification information and data type information.

According to one or more embodiments of the present disclosure, the data request includes a data read request or a data write request. The processing module accesses, by the userspace process, the target cached data and processing the data request, specifically including: in response to the data request being the data read request, reading, by the userspace process, the target cached data; and in response to the data request being the data write request, writing, by the userspace process, the target cached data.

**In** a third aspect, according to one or more embodiments of the present disclosure, an electronic device is provided, including: a processor and a memory communicatively connected to the processor;
the memory storing computer executable instructions;
the processor executing the computer executable instructions stored by the memory to implement the method of data request processing according to the above first aspect and various possible designs of the first aspect.

In a fourth aspect, according to one or more embodiments of the present disclosure, a computer readable storage medium is provided, the computer readable storage medium storing computer executable instructions, the computer executable instructions, upon executed by a processor, causing the processor to implement the method of data request processing according to the above first aspect and various possible designs of the first aspect.

In a fifth aspect, embodiments of the present disclosure provide a computer program product, the computer program product including a computer program, the computer program, when executed by a processor, causing the processor to implement the method of data processing according to the above first aspect and various possible designs of the first aspect.

The above description is only example embodiments of the present disclosure and an illustration of the technical principles. It should be understood by those skilled in the art that the scope of the disclosure involved in the present disclosure is not limited to the technical solution formed by the specific combination of the above technical features, but also covers other technical solutions formed by any combination of the above technical features without departing from the above disclosed concept. For example, a technical solution formed by replacing the above-mentioned features with technical features having similar functions as disclosed in the present disclosure (but not limited to those technical features).

In addition, although the operations are depicted in a particular order, this should not be understood as requiring that the operations are performed in the particular order shown or in a sequential order. Multitasking and parallel processing may be advantageous in certain circumstances. Likewise, although several specific implementation details are included in the above discussion, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments, either individually or in any suitable sub-combination.

Although the present subject matter has been described in language specific to structural features and/or methodological actions, it should be understood that the subject matter defined in the appended claims is not necessarily limited to the specific features or actions described above. Rather, the specific features and actions described above are only example forms of implementing the claims.

## Claims

1. A method of data request processing, the method being applied at a filesystem in userspace, the filesystem in userspace including a kernel module and a userspace process, the kernel module being configured to send a data request to the userspace process, and the userspace process being configured to process the data request, the method comprising:
obtaining (S201), by the userspace process, a data request list in the kernel module, wherein the data request list includes a plurality of data requests to be processed and virtual address information corresponding to respective data requests of the plurality of data requests;
querying (S202), for each of the data requests, by the userspace process, physical address information corresponding to the virtual address information, according to the virtual address information corresponding to the data request;
querying (S203), by the physical address information, target cached data corresponding to the data request, from a plurality of cached data stored in the kernel module, wherein a one-to-one correspondence between the cached data and the physical address information is stored in the kernel module;
accessing (S204), by the userspace process, the target cached data; and processing the data request.

2. The method of claim 1, wherein the method further comprises: before obtaining, by the userspace process, the data request list in the kernel module,
configuring, by the kernel module, a memory management unit, MMU, page table, wherein the MMU page table comprises the virtual address information corresponding to the physical address information for each of the plurality of cached data; and
querying, by the userspace process, for each of the data requests, the physical address information corresponding to the virtual address information, according to the virtual address information corresponding to the data request comprises:
querying, by the userspace process, for each of the data requests, the physical address information corresponding to the virtual address information from the MMU page table, according to the virtual address information corresponding to the data request.

3. The method of claim 2, wherein configuring, by the kernel module, the memory management unit, MMU, page table comprises:
copying, by the kernel module, each of the plurality of cached data to obtain a plurality of rebound cached data; and
configuring the corresponding virtual address information for the physical address information for each of the rebound cached data to obtain the MMU page table; and
querying, by the physical address information, the target cached data corresponding to the data request from the plurality of cached data stored in the kernel module comprises:
querying, by the physical address information, the target cache data corresponding to the data request, from the plurality of the rebound cached data stored in the kernel module.

4. The method of any of claims 1 to 3, wherein a character device interface is configured in the kernel module, and a data transmission layer connected to the character device interface is configured in the userspace process; and
obtaining, by the userspace process, the data request list in the kernel module comprises:
obtaining, by the data transmission layer in the userspace process and the character device interface in the kernel module, the data request list from the kernel module.

5. The method of any of claims 1 to 4, further comprising:
determining location information of a data request of the data requests that is being processed, in the data request list;
labelling the location information in recorded information; and
in response to processing of the data request being completed, recording, in the recorded information, information that the processing of the data request is completed.

6. The method of claim 5, further comprising:
in response to restarting of the userspace process, obtaining, from the record information, the location information of the data request that is being processed, in the data request list; and
continuing processing of the data request corresponding to the location information.

7. The method of any one of claims 1 to 6, wherein the method further comprises: before obtaining, by the userspace process, the data request list in the kernel module,
in response to the kernel module receiving a data request of any application program, determining a data description label of the data request, wherein the data description label comprises the virtual address information;
associating the virtual address information with the data request; and
adding the associated data request and the virtual address information into the data request list.

8. The method of claim 7, wherein the data description label further comprises one or more of data length information, data identification information and data type information.

9. The method of any of claims 1 to 8, wherein the data request comprises a data read request or a data write request;
accessing, by the userspace process, the target cached data and processing the data request comprises:
in response to the data request being the data read request, reading, by the userspace process, the target cached data; and
in response to the data request being the data write request, writing, by the userspace process. the target cached data.

10. An apparatus of data request processing, the apparatus being applied at a filesystem in userspace, the filesystem in userspace including a kernel module and a userspace process, the kernel module being configured to send a data request to the userspace process, and the userspace process being configured to process the data request, the apparatus being **characterized in that** it comprises :
an obtaining module (401) configured to obtain, by the userspace process, a data request list in the kernel module, wherein the data request list comprises a plurality of data requests to be processed and virtual address information corresponding to respective data requests of the plurality of data requests, and query physical address information corresponding to the virtual address information;
a first query module (402) configured to, query, by the userspace process, for each of the data requests, the physical address information corresponding to the virtual address information, according to the virtual address information corresponding to the data request;
a second query module (403) configured to query, by the physical address information, target cached data corresponding to the data request from a plurality of cached data stored in the kernel module, wherein a one-to-one correspondence between the cached data and the physical address information is stored in the kernel module;
a processing module (404) configured to access, by the userspace process, the target cache data, and process the data request.

11. An electronic device, comprises:
a processor, and a memory communicatively connected to the processor;
the memory storing computer executable instructions;
the processor executing the computer executable instructions stored by the memory to implement the method of data request processing according to any one of claims 1 to 9.

12. A computer readable storage medium storing computer executable instructions, the computer executable instructions, when executed by a processor, causing the processor to implement the method of data request processing according to any one of claims 1 to 9.

13. A computer program product including a computer program, the computer program, when executed by a processor, causing the processor to implement the method of data processing according to any one of claims 1 to 9.

## Patentansprüche

1. Verfahren zum Verarbeiten von Datenanforderungen, wobei das Verfahren auf ein Dateisystem in einem Benutzerbereich angewendet wird, wobei das Dateisystem in dem Benutzerbereich ein Kernelmodul und einen Userspace-Prozess einschließt, wobei das Kernelmodul dazu konfiguriert ist, eine Datenanforderung an den Userspace-Prozess zu senden, und wobei der Userspace-Prozess dazu konfiguriert ist, die Datenanforderung zu verarbeiten, wobei das Verfahren Folgendes umfasst:
Erhalten (S201) durch den Userspace-Prozess einer Datenanforderungsliste in dem Kernelmodul, wobei die Datenanforderungsliste eine Vielzahl von zu verarbeitenden Datenanforderungen und virtuelle Adressinformationen einschließt, die den jeweiligen Datenanforderungen der Vielzahl von Datenanforderungen entsprechen;
Abfragen (S202) für jede der Datenanforderungen von physischen Adressinformationen, die den virtuellen Adressinformationen entsprechen, durch den Userspace-Prozess gemäß den virtuellen Adressinformationen, die der Datenanforderung entsprechen;
Abfragen (S203) durch die physischen Adressinformationen von gecachten Zieldaten, die der Datenanforderung entsprechen, aus einer Vielzahl von in dem Kernelmodul gecachten Daten, wobei in dem Kernelmodul eine Eins-zu-eins-Entsprechung zwischen den gecachten Daten und den physischen Adressinformationen gespeichert ist;
Zugreifen (S204) durch den Userspace-Prozess auf die gecachten Zieldaten; und
Verarbeiten der Datenanforderung.

2. Verfahren nach Anspruch 1, wobei das Verfahren weiter Folgendes umfasst: vor dem Erhalten durch den Userspace-Prozess der Datenanforderungsliste in dem Kernelmodul,
Konfigurieren durch das Kernelmodul einer Seitentabelle einer Speicherverwaltungseinheit, MMU, wobei die MMU-Seitentabelle die virtuellen Adressinformationen umfasst, die den physischen Adressinformationen für alle der gecachten Daten entsprechen; und
das Abfragen durch den Userspace-Prozess für jede der Datenanforderungen der virtuellen Adressinformationen, die den physischen Adressinformationen entsprechen, gemäß den der Datenanforderung entsprechenden virtuellen Adressinformationen Folgendes umfasst:
Abfragen durch den Userspace-Prozess für jede der Datenanforderungen der physischen Adressinformationen, die den virtuellen Adressinformationen entsprechen, aus der MMU-Seitentabelle gemäß den virtuellen Adressinformationen, die der Datenanforderung entsprechen.

3. Verfahren nach Anspruch 2, wobei das Konfigurieren der Seitentabelle der Speicherverwaltungseinheit (MMU) durch das Kernelmodul Folgendes umfasst:
Kopieren jeder der Vielzahl gecachter Daten durch das Kernelmodul, um eine Vielzahl gecachter Rebound-Daten zu erhalten; und
Konfigurieren der entsprechenden virtuellen Adressinformationen für die physischen Adressinformationen für alle gecachten Rebound-Daten, um die MMU-Seitentabelle zu erhalten; und
das Abfragen durch die physischen Adressinformationen der gecachten Zieldaten, die der Datenanforderung entsprechen, aus der Vielzahl gecachter Daten, die in dem Kernelmodul gespeichert sind, Folgendes umfasst:
Abfragen durch die physischen Adressinformationen der gecachten Zieldaten, die der Datenanforderung entsprechen, aus der Vielzahl der in dem Kernelmodul gecachten Rebound-Daten.

4. Verfahren nach einem der Ansprüche 1 bis 3, wobei eine Zeichenvorrichtungsschnittstelle in dem Kernelmodul konfiguriert ist und ein Datenübertragungs-Layer, der mit der Zeichenvorrichtungsschnittstelle verbunden ist, in dem Userspace-Prozess konfiguriert ist; und
Erhalten durch den Userspace-Prozess der Datenanforderungsliste in dem Kernelmodul Folgendes umfasst:
Erhalten durch den Datenübertragungs-Layer in dem Userspace-Prozess und die Zeichenvorrichtungsschnittstelle in dem Kernelmodul der Datenanforderungsliste von dem Kernelmodul.

5. Verfahren nach einem der Ansprüche 1 bis 4, das weiter Folgendes umfasst:
Bestimmen von Ortsinformationen einer Datenanforderung der Datenanforderungen, die gerade verarbeitet wird, in der Datenanforderungsliste;
Bezeichnen der Ortsinformationen in aufgezeichneten Informationen; und
als Reaktion auf das Abschließen des Verarbeitens der Datenanforderung, Aufzeichnen der Information, das das Verarbeiten der Datenanforderung abgeschlossen ist, in den aufgezeichneten Informationen.

6. Verfahren nach Anspruch 5, das weiter Folgendes umfasst:
als Reaktion auf das Neustarten des Userspace-Prozesses, Erhalten aus den Aufzeichnungsinformationen der Ortsinformationen der Datenanforderung, die gerade verarbeitet wird, in der Datenanforderungsliste; und
Fortsetzen des Verarbeitens der Datenanforderung gemäß der Ortsinformation.

7. Verfahren nach einem der Ansprüche 1 bis 6, wobei das Verfahren weiter Folgendes umfasst: vor dem Erhalten durch den Userspace-Prozess der Datenanforderungsliste in dem Kernelmodul,
als Reaktion darauf, dass das Kernelmodul eine Datenanforderung eines beliebigen Anwendungsprogramms empfängt, Bestimmen einer Datenbeschreibungsbezeichnung der Datenanforderung, wobei die Datenbeschreibungsbezeichnung die virtuellen Adressinformationen umfasst;
Zuordnen der virtuellen Adressinformationen zu der Datenanforderung; und
Hinzufügen der zugeordneten Datenanforderung und der virtuellen Adressinformationen zu der Datenanforderungsliste.

8. Verfahren nach Anspruch 7, wobei die Datenbeschreibungsbezeichnung weiter eine oder mehrere einer Datenlängeninformation, Datenidentifikationsinformation und Datentypinformation umfasst.

9. Verfahren nach einem der Ansprüche 1 bis 8, wobei die Datenanforderung eine Datenleseanforderung oder eine Datenschreibanforderung umfasst;
Zugreifen durch den Userspace-Prozess auf die gecachten Zieldaten und das Verarbeiten der Datenanforderung Folgendes umfasst:
als Reaktion darauf, dass es sich bei der Datenanforderung um eine Datenleseanforderung handelt, Lesen der gecachten Zieldaten durch den Userspace-Prozess; und
als Reaktion darauf, dass es sich bei der Datenanforderung um eine Datenschreibanforderung handelt, Schreiben der gecachten Zieldaten durch den Userspace-Prozess.

10. Einrichtung zur Datenanforderungsverarbeitung, wobei die Einrichtung auf einen Dateisystem in Userspace angewendet wird, wobei das Dateisystem in dem Userspace ein Kernelmodul und einen Userspace-Prozess einschließt, wobei das Kernelmodul dazu konfiguriert ist, eine Datenanforderung an den Userspace-Prozess zu senden, und der Userspace-Prozess dazu konfiguriert ist, die Datenanforderung zu verarbeiten, wobei die Einrichtung **dadurch gekennzeichnet ist, dass** sie Folgendes umfasst:
ein Erhaltungsmodul (401), das dazu konfiguriert ist, durch den Userspace-Prozess eine Datenanforderungsliste in dem Kernelmodul zu erhalten, wobei die Datenanforderungsliste eine Vielzahl von zu verarbeitenden Datenanforderungen und virtuelle Adressinformationen, die den jeweiligen Datenanforderungen der Vielzahl von Datenanforderungen entsprechen, sowie physische Abfrageadressinformationen, die den virtuellen Adressinformationen entsprechen, umfasst;
ein erstes Abfragemodul (402), das dazu konfiguriert ist, durch den Userspace-Prozess für jede der Datenanforderungen die den virtuellen Adressinformationen entsprechenden physischen Adressinformationen gemäß den virtuellen Adressinformationen, die der Datenanforderung entsprechen, abzufragen;
ein zweites Abfragemodul (403), das dazu konfiguriert ist, durch die physischen Adressinformationen gecachte Zieldaten, die der Datenanforderung entsprechen, aus einer Vielzahl gecachter Daten, die in dem Kernelmodul gespeichert sind, abzufragen, wobei eine Eins-zu-eins-Entsprechung zwischen den gecachten Daten und den physischen Adressinformationen in dem Kernelmodul gespeichert ist;
ein Verarbeitungsmodul (404), das dazu konfiguriert ist, durch den Userspace-Prozess auf die gecachten Zieldaten zuzugreifen und die Datenanforderung zu verarbeiten.

11. Elektronische Vorrichtung, die Folgendes umfasst:
mindestens einen Prozessor und einen Speicher, der mit dem Prozessor kommunikativ verbunden ist;
wobei der Speicher computerausführbare Anweisungen speichert;
wobei der Prozessor die in dem Speicher gespeicherten computerausführbaren Anweisungen ausführt, um das Datenanforderungsverarbeitungsverfahren nach einem der Ansprüche 1 bis 9 zu implementieren.

12. Computerlesbares Speichermedium, das computerausführbare Anweisungen speichert, wobei die computerausführbaren Anweisungen, wenn sie von einem Prozessor ausgeführt werden, den Prozessor dazu veranlassen, das Verfahren nach einem der Ansprüche 1 bis 9 zu implementieren.

13. Computerprogrammprodukt, das ein Computerprogramm einschließt, wobei das Computerprogramm, wenn es von einem Prozessor ausgeführt wird, den Prozessor veranlasst, das Datenverarbeitungsverfahren nach einem der Ansprüche 1 bis 9 zu implementieren.

## Revendications

1. Procédé de traitement de requêtes de données, le procédé étant appliqué à un système de fichier dans un espace utilisateur, le système de fichiers en espace utilisateur incluant un module noyau et un processus en espace utilisateur, le module noyau étant configuré pour envoyer une requête de données au processus en espace utilisateur, et le processus en espace utilisateur étant configuré pour traiter la requête de données, le procédé comprenant :
l'obtention (S201), par le processus en espace utilisateur, d'une liste de requêtes de données dans le module noyau, dans lequel la liste de requêtes de données inclut une pluralité de requêtes de données à traiter et des informations d'adresse virtuelle correspondant à des requêtes de données respectives de la pluralité de requêtes de données ;
l'interrogation (S202), pour chacune des requêtes de données, par le processus en espace utilisateur, d'informations d'adresse physique correspondant aux informations d'adresse virtuelle, selon les informations d'adresse virtuelle correspondant à la requête de données ;
l'interrogation (S203), par les informations d'adresse physique, de données cibles mises en cache correspondant à la requête de données, à partir d'une pluralité de données mises en cache stockées dans le module noyau, dans lequel une correspondance biunivoque entre les données mises en cache et les informations d'adresse physique sont stockée dans le module noyau ;
l'accès (S204), par le processus en espace utilisateur, aux données cibles mises en cache ; et
le traitement de la requête de données.

2. Procédé selon la revendication 1, dans lequel le procédé comprend en outre : avant d'obtenir, par le processus en espace utilisateur, la liste de requêtes de données dans le module du noyau,
la configuration, par le module noyau, d'une table de pages d'unité de gestion de mémoire (MMU), dans lequel la table de pages de MMU comprend les informations d'adresse virtuelle correspondant aux informations d'adresse physique pour chaque donnée mise en cache de la pluralité de données mises en cache ; et
l'interrogation, par le processus en espace utilisateur, pour chacune des requêtes de données, des informations d'adresse physique correspondant aux informations d'adresse virtuelle, selon les informations d'adresse virtuelle correspondant à la requête de données comprend :
l'interrogation, par le processus en espace utilisateur, pour chacune des requêtes de données, des informations d'adresse physique correspondant aux informations d'adresse virtuelle de la table de pages de MMU, selon les informations d'adresse virtuelle correspondant à la requête de données.

3. Procédé selon la revendication 2, dans lequel la configuration, par le module noyau, de la table de pages d'unité de gestion de mémoire, MMU, comprend :
la copie, par le module du noyau, de chaque donnée mise en cache de la pluralité de données mises en cache pour obtenir une pluralité de données de rebond mises en cache ; et
la configuration des informations d'adresse virtuelle correspondantes pour les informations d'adresse physique pour chacune des données de rebond mises en cache pour obtenir la table de pages de MMU ; et
l'interrogation, par les informations d'adresse physique, des données cibles mises en cache correspondant à la requête de données à partir de la pluralité de données mises en cache stockées dans le module noyau comprend :
l'interrogation, par les informations d'adresse physique, des données de cache cible correspondant à la requête de données, à partir de la pluralité des données de rebond mises en cache stockées dans le module de noyau.

4. Procédé selon l'une quelconque des revendications 1 à 3, dans lequel une interface de dispositif de caractères est configurée dans le module de noyau, et une couche de transmission de données reliée à l'interface de dispositif de caractères est configurée dans le processus en espace utilisateur ; et
l'obtention, par le processus en espace utilisateur, de la liste de requêtes de données dans le module du noyau comprend :
l'obtention, par la couche de transmission de données dans le processus en espace utilisateur et l'interface de dispositif de caractères dans le module du noyau, de la liste de requêtes de données du module du noyau.

5. Procédé selon l'une quelconque des revendications 1 à 4, comprenant en outre :
la détermination des informations de localisation d'une requête de données des requêtes de données qui est traitée, dans la liste de requêtes de données ;
l'étiquetage des informations de localisation dans des informations enregistrées ; et
à la suite de l'achèvement du traitement de la requête de données, l'enregistrement, dans les informations enregistrées, d'informations selon lesquelles le traitement de la requête de données est terminé.

6. Procédé selon la revendication 5, comprenant en outre :
à la suite du redémarrage du processus en espace utilisateur, l'obtention à partir des informations d'enregistrement, des informations de localisation de la requête de données qui est traitée, dans la liste de requêtes de données ; et
la poursuite du traitement de la requête de données correspondant aux informations de localisation.

7. Procédé selon l'une quelconque des revendications 1 à 6, dans lequel le procédé comprend en outre : avant d'obtenir, par le processus en espace utilisateur, la liste de requêtes de données dans le module du noyau,
à la suite de la réception par le module du noyau d'une requête de données d'un programme d'application quelconque, la détermination d'une étiquette de description de données de la requête de données, dans lequel l'étiquette de description de données comprend les informations d'adresse virtuelle ;
l'association des informations d'adresse virtuelle à la requête de données ; et
l'ajout de la requête de données associée et des informations d'adresse virtuelle dans la liste de requêtes de données.

8. Procédé selon la revendication 7, dans lequel l'étiquette de description de données comprend en outre une ou plusieurs des informations de longueur de données, des informations d'identification de données et des informations de type de données.

9. Procédé selon l'une quelconque des revendications 1 à 8, dans lequel la requête de données comprend une demande de lecture de données ou une demande d'écriture de données ;
l'accès, par le processus en espace utilisateur, aux données cibles mises en cache et le traitement de la requête de données comprennent :
en réponse à la requête de données qui est la demande de lecture de données, la lecture, par le processus en espace utilisateur, des données cibles mises en cache ; et
en réponse à la requête de données qui est la demande d'écriture de données, l'écriture, par le processus en espace utilisateur, des données cibles mises en cache.

10. Appareil de traitement de requête de données, l'appareil étant appliqué à un système de fichiers dans un espace utilisateur, le système de fichiers dans un espace utilisateur incluant un module de noyau et un processus en espace utilisateur, le module de noyau étant configuré pour envoyer une requête de données au processus en espace utilisateur, et le processus en espace utilisateur étant configuré pour traiter la requête de données, l'appareil étant **caractérisé en ce qu'**il comprend :
un module d'obtention (401) configuré pour obtenir, par le processus en espace utilisateur, une liste de requêtes de données dans le module noyau, dans lequel la liste de requêtes de données comprend une pluralité de requêtes de données à traiter et des informations d'adresse virtuelle correspondant à des requêtes de données respectives de la pluralité de requêtes de données, et des informations d'adresse physique d'interrogation correspondant aux informations d'adresse virtuelle ;
un premier module d'interrogation (402) configuré pour interroger, par le processus en espace utilisateur, pour chacune des requêtes de données, les informations d'adresse physique correspondant aux informations d'adresse virtuelle, selon les informations d'adresse virtuelle correspondant à la requête de données ;
un second module d'interrogation (403) configuré pour interroger, par les informations d'adresse physique, les données cibles mises en cache correspondant à la requête de données parmi une pluralité de données mises en cache stockées dans le module noyau, dans lequel une correspondance biunivoque entre les données mises en cache et les informations d'adresse physique sont stockée dans le module noyau ;
un module de traitement (404) configuré pour avoir accès, par le processus en espace utilisateur, aux données de cache cibles et traiter la requête de données.

11. Dispositif électronique, comprenant :
un processeur et une mémoire raccordée en communication au processeur;
la mémoire stockant des instructions exécutables par ordinateur ;
le processeur exécutant les instructions exécutables par ordinateur stockées par la mémoire pour mettre en œuvre le procédé de traitement de requête de données selon l'une quelconque des revendications 1 à 9.

12. Support de stockage lisible par ordinateur stockant des instruction exécutables par ordinateur, les instructions exécutables par ordinateur, lorsqu'elles sont exécutées par un processeur, amènent le processeur à mettre en œuvre le procédé de traitement de requête de données selon l'une quelconque des revendications 1 à 9.

13. Produit de programme informatique incluant un programme informatique, le programme informatique, lorsqu'il est exécuté par un processeur, amenant le processeur à mettre en œuvre le procédé de traitement de requête de données selon l'une quelconque des revendications 1 à 9.
